# EUROPEAN PATENT APPLICATION

(11) **EP 4 431 917 A1**
(43) Date of publication of application: **18.09.2024**
(21) Application number: 23890897.4
(22) Date of filing: 17.11.2023
(51) Int. Cl.: G01N 21/64, G01N 21/01, G02B 21/00

(54) **OPTICAL INSTRUMENT FOR MINIATURE MULTI-PHOTON MICROSCOPE, IMAGING SYSTEM AND IMAGING METHOD**

(30) Priority: 18.11.2022 CN 202211443539
(71) Applicant: Beijing Transcend Vivoscope Bio-Technology Co., Ltd., Beijing 100085 (CN); Peking University, Beijing 100871 (CN)
(72) Inventor: ZHAO, Chunzhu, Beijing 100085 (CN); WANG, Aimin, Beijing 100085 (CN); CHENG, Heping, Beijing 100085 (CN)
(74) Representative: Murgitroyd & Company
(86) International application number: PCT/CN2023/132378
(87) International publication number: WO 2024/104469

(57) **Abstract**

Disclosed are an optical instrument, an imaging system, and an imaging method for a miniature multi-photon microscope, relating to the optical configuration field. The optical instrument is configured to have a fluorescence excitation optical path and a fluorescence collection optical path. The optical instrument includes a condenser, and the condenser includes a first lens group and a second lens group separately disposed. The first lens group is located in the fluorescence collection optical path, the second lens group is located in the fluorescence excitation optical path and the fluorescence collection optical path. The second lens group is tight arranged with an objective. According to the scheme of the present disclosure. A collection efficiency of scattered fluorescence of the miniature multi-photon microscope may be improved, thereby improving an imaging signal-to-noise ratio and an imaging depth when a sample to be test with a scattering characteristic is observed.

## Description

### TECHNICAL FIELD

The present disclosure relates to the optical configuration field, and in particular, to an optical instrument, an imaging system, and an imaging method for a miniature multi-photon microscope.

### BACKGROUND

A miniature multi-photon microscope has characteristics of light weight, small volume, and flexible use. A fluorescent-labeled or an auto-fluorescent living tissue may be imaged in real time by the miniature multi-photon microscope through multi-photon absorption and fluorescence emission characteristics of a fluorescent agent. However, currently, a configuration of a fluorescence collection optical path in the miniature multi-photon microscope is relatively simple, using a miniature objective combined with a single condenser separated from the miniature objective. Such optical instruments may meet a requirement of collecting ballistic fluorescence photons. However, as for a sample to be tested with a scattering characteristic, such as living tissue, fluorescent photons may scatter in the tissue and deviate from an original orbit. The configuration of such optical instruments may not guarantee that scattered fluorescent photons enter a collection optical path, thereby limiting a signal-to-noise ratio of fluorescence imaging and an imaging depth.

### SUMMARY

To solve the technical problem mentioned above, the present disclosure is provided. Embodiments of the present disclosure provide an optical instrument, an imaging system, and an imaging method for a miniature multi-photon microscope.

In a first aspect, an embodiment of the present disclosure provides an optical instrument. The optical instrument is configured to have a fluorescence excitation optical path and a fluorescence collection optical path, and the optical instrument includes: a condenser. The condenser includes a first lens group and a second lens group separately disposed, the first lens group is located in the fluorescence collection optical path, the second lens group is located in the fluorescence excitation optical path and the fluorescence collection optical path, and the second lens group is tightly arranged with a miniature objective.

According to the first aspect, in some implementations of the first aspect, the optical instrument further includes a third lens group located in the fluorescence excitation optical path, and in the fluorescence excitation optical path, configurations of the third lens group and the second lens group are tube lenses.

According to the first aspect, in some implementations of the first aspect, the optical instrument further includes a beam splitting optical element located in the fluorescence excitation optical path and the fluorescence collection optical path, and the beam splitting optical element is configured to transmit or reflect a light beam based on a wavelength of the light beam.

According to the first aspect, in some implementations of the first aspect, the beam splitting optical element includes a dichroic mirror.

According to the first aspect, in some implementations of the first aspect, the first lens group and the second lens group are separated by the dichroic mirror, and the second lens group and the third lens group are separated by the dichroic mirror.

According to the first aspect, in some implementations of the first aspect, the optical instrument further includes a femtosecond laser device located in the fluorescence excitation optical path, and the femtosecond laser device is configured to enable a sample to be tested loaded on the optical instrument to simultaneously absorb at least two photons.

According to the first aspect, in some implementations of the first aspect, the optical instrument further includes a collimating lens, a galvanometer and a scanning lens located in the fluorescence excitation optical path. The collimating lens is configured to collimate an initial laser beam and emit a collimated beam, the galvanometer is configured to reflect and scan the collimated beam, and the scanning lens is configured to focus the collimated beam reflected by the galvanometer on a focal plane of the scanning lens to obtain a focused beam, and emit the focused beam to the third lens group.

According to the first aspect, in some implementations of the first aspect, the collimating lens includes a negative lens and a cemented doublet lens.

According to the first aspect, in some implementations of the first aspect, the objective includes an infinite objective, and the objective is located in the fluorescence excitation optical path and the fluorescence collection optical path.

According to the first aspect, in some implementations of the first aspect, a length of the infinite objective is not greater than 4.34 mm, and a physical aperture of an optical lens of the infinite objective is not greater than 3 mm.

According to the first aspect, in some implementations of the first aspect, in the fluorescence excitation optical path, a configuration of the second lens group is a tube lens.

According to the first aspect, in some implementations of the first aspect, the optical instrument further includes a fourth lens group, and in the fluorescence excitation optical path, configurations of the fourth lens group and the second lens group are tube lenses, and the fourth lens group and the second lens group are tightly arranged with each other.

According to the first aspect, in some implementations of the first aspect, the second lens group is configured to converge a fluorescent beam emitted by the objective and emit a first convergent beam.

According to the first aspect, in some implementations of the first aspect, the first lens group is configured to emit a second convergent beam based on the first convergent beam, and a diameter of the second convergent beam is less than a diameter of the first convergent beam.

In a second aspect, an embodiment of the present disclosure provides an imaging system, including: the optical instrument according to the first aspect, configured to collect an optical signal of a sample to be tested; and a signal processing module, configured to convert the optical signal collected by the optical instrument into an image

In a third aspect, an embodiment of the present disclosure provides an imaging method, including: determining an area to be imaged of a sample to be tested; and detecting, based on the optical instrument according to the first aspect, an optical signal of the area to be imaged, to generate an image corresponding to the area to be imaged based on the optical signal.

The optical instrument provided by embodiments of the present disclosure includes a condenser, and the condenser includes a first lens group and a second lens group separately disposed. The first lens group is located in the fluorescence collection optical path, the second lens group is located in the fluorescence excitation optical path and the fluorescence collection optical path. And the second lens group is tightly arranged with an objective, so that a scattered fluorescence beam emitted by the objective may be immediately converged, thereby preventing the scattered beam from exiting the fluorescence collection optical path. In addition, through the first lens group, the scattered light beam may be further converged to ensure that the converged scattered light beam may enter a fluorescence collection fiber bundle and be captured by a detector.

### BRIEF DESCRIPTION OF THE DRAWINGS

Embodiments of the present disclosure will be described in detail with reference to accompanying drawings to make the above and other purposes, features, and advantages of the present disclosure more apparent. The accompanying drawings are used to provide a further understanding of the embodiments of the present disclosure and constitute a part of the specification. The accompanying drawings are used together with the embodiments of the present disclosure to explain the present disclosure and do not constitute a limitation on the present disclosure. In the accompanying drawings, the same reference numeral usually represents the same component or step.
FIG. 1 is a schematic diagram of a partial structure of a relevant optical instrument according to an exemplary embodiment of the present disclosure.
FIG. 2 is a schematic diagram of a partial structure of a relevant optical instrument according to another exemplary embodiment of the present disclosure.
FIG. 3 is a schematic structural diagram of an optical instrument according to an exemplary embodiment of the present disclosure.
FIG. 4 is a schematic structural diagram of an excitation optical path of an optical instrument according to an exemplary embodiment of the present disclosure.
FIG. 5 is a schematic structural diagram of a collection optical path of an optical instrument according to an exemplary embodiment of the present disclosure.
FIG. 6 is a schematic structural diagram of a condenser according to an exemplary embodiment of the present disclosure.
FIG. 7 is a line graph of fluorescence collection efficiencies of three optical instruments according to an exemplary embodiment of the present disclosure.
FIG. 8 is an analysis diagram of fluorescence propagation trajectories of a collection optical path of an optical instrument according to an exemplary embodiment of the present disclosure.
FIG. 9 is a schematic structural diagram of an imaging system according to an exemplary embodiment of the present disclosure.
FIG. 10 is a flowchart of an imaging method according to an exemplary embodiment of the present disclosure.

### DETAILED DESCRIPTION OF THE EMBODIMENTS

A clear and complete description of the technical solution in the embodiments of the present disclosure will be provided below with reference to the accompanying drawings. Obviously, the described embodiments are only a part of the embodiments of the present disclosure, not all of them. Based on the embodiments in the present disclosure, all other embodiments obtained by those skilled in the art without creative labor fall within a protection scope of the present disclosure. A microscope is an optical instrument including a combination of optical lenses, used to magnify small objects to a state that may be observed by a human eye or an electronic device.

A fluorescence microscope is an optical instrument where a light source irradiates an object to be tested to emit fluorescence, so that a shape and a position of the object to be tested may be observed.

A single-photon fluorescence microscope is an optical instrument where a light source irradiates an object to be tested so that a fluorescent molecule in the object to be tested absorbs a photon and then emits a fluorescent photon through radiation transition to be detected by the microscope.

A multi-photon fluorescence microscope is an optical instrument where under a high photon density, a fluorescent molecule in an object to be tested may simultaneously absorb two or more photons with a long wavelength, and after a short lifetime of an excited state, the object to be tested emits a fluorescent photon with a short wavelength to be detected by the microscope. The fluorescent photon with the short wavelength is classified relative to a fluorescent photon with a long wavelength.

A finite objective is an optical element where an object and an image of the object are both located at a finite distance from the objective.

An infinite objective is an optical element where after light of an object passes through the objective, an image of the object is located at infinity. That is, light beams emit in parallel from the objective and may not be directly imaged. A tube lens being required to form an image.

A Tube lens is a group of lenses. As for a microscope imaging system, when an infinite objective is used, light emitted from the objective is in parallel, and a group of lenses is required to converge the paralleled light on an image plane. The group of lenses is called tube lens.

A Scanning lens is a group of lenses. As for a scanning optical system, a collimated beam swings through a galvanometer, and an emitted light beam is imaged on the image plane through a group of lenses. The group of lenses is called scanning lens.

A dichroic mirror is an optical element that allow light of a certain wavelength to almost completely pass through, while light of other wavelengths is almost completely reflected by the dichroic mirror.

A fluorescence excitation optical path is an optical transmission path where a laser emitted by a laser device is transmitted to a sample tissue through optical elements, causing a fluorescent molecule inside the sample tissue to absorb the laser and emit fluorescence. The optical transmission path is called the fluorescence excitation optical path.

A fluorescence collection optical path is an optical transmission path where a fluorescence molecule inside a sample tissue absorbs a laser and emits fluorescence, the fluorescence passes through an objective, and then is collected by a condenser to a detector. The optical transmission path is called the fluorescence collection optical path.

For ease of understanding, examples of relevant optical instruments are provided.

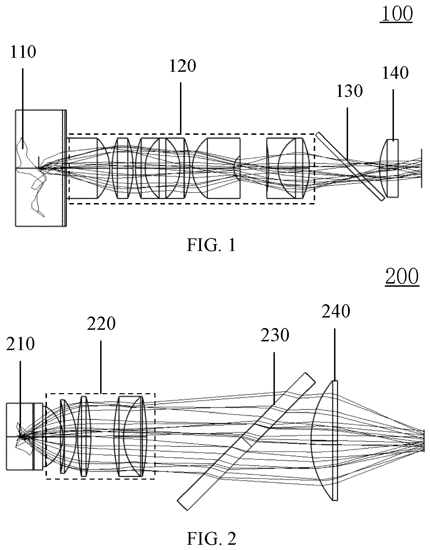

FIG. 1 is a schematic diagram of a partial structure of a relevant optical instrument. The schematic diagram of the partial structure is a schematic diagram of a fluorescence collection optical path of the relevant optical instrument. As shown in FIG. 1, the optical instrument includes a finite miniature objective 120, a dichroic mirror 130, and a single condenser 140. The optical instrument may be used to observe a neural function imaging of a live brain tissue 110. For example, a femtosecond laser (for example, a wavelength of the femtosecond laser is 920 nm) emitted from a hollow photonic crystal fiber is collimated by using a collimating lens. Then the femtosecond laser is reflected by a galvanometer and enters a scanning lens. After the femtosecond laser is focused by the scanning lens, the femtosecond laser is reflected by the dichroic mirror 130, enters the finite miniature objective 120, and is focused on a sample tissue. Thereafter, a fluorescent protein in the sample tissue is excited through two-photon effect to emit green fluorescence (for example, a wavelength of the green fluorescence is 520 nm ± 20 nm). The green fluorescence is focused by the finite miniature objective 120, then passes through the dichroic mirror 130, and is focused by the single condenser 140 into a flexible fiber bundle. The green fluorescence is then introduced into a highly sensitive photodetector through the flexible fiber bundle to detect fluorescence.

Since both laser and fluorescence are conducted by a flexible optical fiber, a miniature probe corresponding to the optical instrument shown in FIG. 1 may be worn on a head of an animal to observe a brain nerve function signal of the animal in vivo without affecting free movement of the animal. However, since a brain tissue of the animal is a chaotic scattering tissue, a penetration depth of the laser with a wavelength of 920 nm is limited. At a depth of 400 µm in the brain tissue of the animal, fluorescence of a high signal-to-noise ratio may still be excited. However, a signal-to-noise ratio of a fluorescence signal emitted at a deeper depth of a brain area is relatively poor.

FIG. 2 is a schematic diagram of a partial structure of a relevant optical instrument according to another exemplary embodiment of the present disclosure. The schematic diagram of the partial structure is a schematic diagram of a fluorescence collection optical path of the relevant optical instrument. As shown in FIG. 2, the optical instrument includes an infinite small objective 220, a dichroic lens 230, and a single condenser 240. The optical instrument may also be used to observe a neural functional imaging of a live brain tissue 210. Similarly, a femtosecond laser (for example, a wavelength of the femtosecond laser is 1300 nm) emitted from a hollow photonic crystal fiber is collimated by using a collimating lens. Then the femtosecond laser is reflected by a galvanometer and enters a scanning lens. After the femtosecond laser is focused by the scanning lens, the femtosecond laser is collimated by a tube lens and reflected by the dichroic mirror 230, enters the infinite small objective 220, and is focused on a sample tissue. Thereafter, a fluorescent protein in the sample tissue is excited through three-photon effect to emit green fluorescence (for example, a wavelength of the green fluorescence is 520 nm ± 20 nm). A beam of the green fluorescence is emitted from the infinite small objective 220, then passes through the dichroic mirror 230, and is focused by the single condenser 240 into a plastic fiber. The green fluorescence is then introduced into a highly sensitive photodetector through the plastic fiber to detect fluorescence. Compared to an excitation wavelength of 920 nm, the laser with the wavelength of 1300 nm has a deeper penetration depth in the scattered brain tissue.

Fluorescence collection configurations of the relevant optical instruments illustrated in FIG. 1 and FIG. 2 are relatively simple, using an infinite objective or a finite objective combined with a single condenser. The simple fluorescence collection configurations are sufficient to collect a ballistic photon. However, in a scattered tissue, fluorescence may scatter and deviate from an original path. Therefore, the simple fluorescence collection configurations may not meet a requirement of collecting scattered fluorescence. Taking green fluorescence as an example, since the green fluorescence is strongly scattered by the brain tissue, most of fluorescence emitted at a depth of 1 mm in the brain tissue deviates from a ballistic path and randomly scatters upon reaching a surface of the brain.

In view of the problem mentioned above, the present disclosure provides an optical instrument to improve a collection efficiency of scattered fluorescence, thereby increasing an imaging depth of a brain tissue and an imaging signal-to-noise ratio.

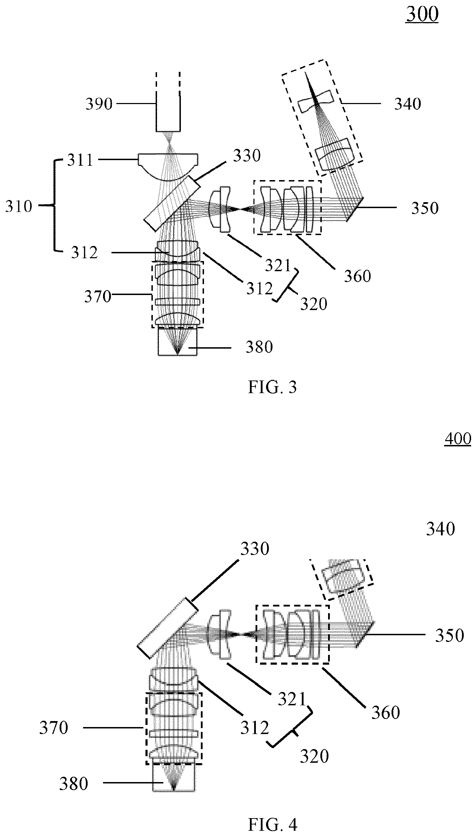

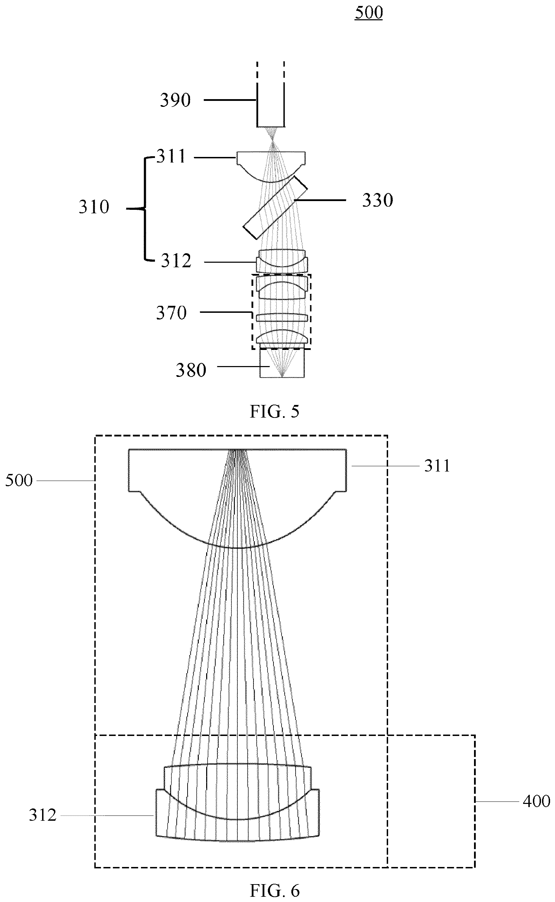

FIG. 3 is a schematic structural diagram of an optical instrument according to an exemplary embodiment of the present disclosure. FIG. 4 is a schematic structural diagram of an excitation optical path of an optical instrument according to an exemplary embodiment of the present disclosure. FIG. 5 is a schematic structural diagram of a collection optical path of an optical instrument according to an exemplary embodiment of the present disclosure.

A structure of the optical instrument provided in the embodiment shown in FIG. 3 will be explained in detail with reference to FIG. 4 and FIG. 5.

As shown in FIG. 3, the optical instrument provided by the embodiment of the present disclosure includes a condenser 310 (the condenser 310 includes a first lens group 311 and a second lens group 312 separately disposed), a tube lens 320 (the tube lens 320 includes the second lens group 312 and a third lens group 321), a dichroic mirror 330, a collimating lens 340, a galvanometer 350, a scanning lens 360, an infinite objective 370, and a flexible fiber bundle 390. An excitation optical path 400 includes a femtosecond laser device, a hollow fiber (not shown in the figure) for transmitting femtosecond laser, the collimating lens 340, the galvanometer 350, the scanning lens 360, the tube lens 320, the dichroic mirror 330, and the infinite objective 370. A collection optical path 500 includes the infinite objective 370, the dichroic mirror 330, the condenser 310, and the flexible fiber bundle 390.

It can be seen that the dichroic mirror 330, the second lens group 312, and the infinite objective 370 are simultaneously located in the excitation optical path 400 and the collection optical path 500. The second lens group 312 is arranged tightly with the infinite objective 370. In the excitation optical path 400, configurations of the second lens group 312 and the third lens group 321 are both tube lenses 320, and the second lens group 312 and the third lens group 321 are separated by the dichroic mirror 330. In the collection optical path 500, configurations of the first lens group 311 and the second lens group 312 are both condensers 310, and the first lens group 311 and the second lens group 312 are separated by the dichroic mirror 330. Furthermore, "arranged tightly with" refers that a relative distance between the second lens group 312 and the infinite objective is less than a preset distance threshold. The relative distance is equal to a ratio of an absolute distance s between the second lens group and the infinite objective to a diameter D of the infinite objective, and the preset distance threshold is generally one-third.

In another embodiment, the tube lens 320 may only include the second lens group arranged tightly with the infinite objective 370.

Furthermore, a working process of the excitation optical path of the optical instrument provided by the embodiment of the present disclosure will be explained in detail according to FIG. 4.

As shown in FIG. 4, the femtosecond laser device emits a femtosecond laser beam, and the femtosecond laser beam is transmitted through the hollow fiber. At a transmission outlet of the hollow fiber, the collimating lens 340 is used to collimate the femtosecond laser beam to obtain a collimated beam. The collimated beam is reflected and scanned by the galvanometer 350. Then the collimated beam enters the scanning lens 360 to be imaged onto a focal plane corresponding to the scanning lens 360. The beam passing through the focal plane are diverged and transmitted into the third lens group 321 of the tube lens 320, then reflected by the dichroic mirror 330 to enter the second lens group 312 of the tube lens 320. After being collimated by the tube lens 320, the beam enters the infinite objective 370. The beam passes through the infinite objective 370 and is focused on an immersion sample 380.

Furthermore, a working process of the collection optical path of the optical instrument provided by the embodiment of the present disclosure will be explained in detail according to FIG. 5.

As shown in FIG. 5, the immersion sample 380 is excited by the femtosecond laser beam emitted by the femtosecond laser device to emit a fluorescence beam, and the fluorescence beam enters the infinite objective 370. After passed through the infinite objective 370, the fluorescence beam enters the second lens group 312 of the condenser 310. The second lens group 312 is used to converge a scattered fluorescence beam to obtain a first convergent beam about the fluorescence beam. Then the first convergent beam is transmitted through the dichroic mirror 330. The dichroic mirror 330 is used for filtering to obtain a transmitted beam within a fluorescence wave band. The transmitted beam is transmitted through the first lens group 311 of the condenser 310 and converged by the first lens group 311 to obtain a second convergent beam. A diameter of the second convergent beam is less than a diameter of the first convergent beam. After passing through the first lens group 311, the second convergent beam may smoothly enter the flexible fiber bundle 390.

As for a fluorescence beam emitted at a deep depth of a sample tissue, when the fluorescence beam reaches the infinite objective 370 after scattering in the sample tissue, the fluorescence beam has deviated from an original transmitting path of the fluorescence beam. The deeper the sample tissue is, the more severe the deviation of the scattered beam in the fluorescence beam will be. In the embodiment of the present disclosure, by arranging the second lens group 312 of the condenser 310 tightly with the infinite objective 370, scattered light beams may be effectively converged in a shortest time and then further converged by the first lens group 311 of the condenser 310 after passing through the dichroic mirror 330, so that the second convergent beam satisfying a fiber collection size of the flexible fiber bundle 390 is obtained. In addition, since the second lens group 312 is arranged tightly with the infinite objective 370, the second lens group is inevitably located in the excitation optical path 400 and the collection optical path 500 simultaneously. Based on this, the embodiment of the present disclosure introduces a tube lens 360 including two separate lens groups in the excitation optical path 400. The second lens group 312 is shared by the condenser 310 and the tube lens 360. The dichroic mirror 330 simultaneously separates the first lens group 311 and the second lens group 312, as well as the third lens group 321 and the second lens group 312. Through the structure of the optical instrument mentioned above, the excitation optical path 400 and the collection optical path 500 in the optical instrument are tightly combined, so that functions of multi-photon fluorescence excitation and fluorescence collection are achieved, thereby maximizing a collection efficiency of the scattered fluorescence.

FIG. 6 is a schematic structural diagram of a condenser according to an exemplary embodiment of the present disclosure. As shown in FIG. 6, in the exemplary embodiment of the present disclosure, the optical instrument includes a condenser 310 and the condenser 310 includes a first lens group 311 and a second lens group 312. The first lens group 311 and the second lens group 312 are separate groups. The condenser 310 may be installed in a relevant optical instrument structure. The second lens group 312 is arranged tightly with an objective in the relevant optical instrument structure and is configured to converge a beam emitted by the objective. The first lens group 311 is configured to further converge the beam based on the second lens group 312. Meanwhile, the first lens group 311 in the condenser 310 provided by the embodiment of the present disclosure is located in a fluorescence collection optical path of the relevant optical instrument structure, and the second lens group 312 is simultaneously located in a fluorescence excitation optical path and the fluorescence collection optical path of the relevant optical instrument structure.

Through the condenser provided by the embodiment of the present disclosure, the light beam emitted by the objective in the relevant optical instrument structure may be timely converged, so that a collection efficiency of a scattered light beam is improved, thereby further increasing an imaging depth of the sample tissue and an imaging signal-to-noise ratio.

In an exemplary embodiment of the present disclosure, the optical instrument further includes a third lens group 321. The third lens group 321 and the condenser 310 in the aforementioned embodiment constitute a new optical configuration. The third lens group 321 and the second lens group 312 constitute a tube lens 320, and the tube lens 320 is located in the excitation optical path 400.

It should be noted that the tube lens 320 may only include one lens group, or may include two or more lens groups. The lens group in the tube lens 320 may be a separated group or a tightly arranged group. The embodiment of the present disclosure only provides a preferred configuration of the tube lens, and is not a specific limitation on the structure of the tube lens. Those skilled in the art may choose a structure of the tube lens based on an actual application situation, as long as a function of the tube lens in the embodiment of the present disclosure may be achieved.

According to the technical solution in the embodiments of the present disclosure, a collection efficiency of scattered light beams emitted by the objective in the optical instrument structure may be improved. Besides, the configuration of the optical instrument in the embodiments of the present disclosure may be more compact by sharing the second lens group 312 between the tube lens 320 and the condenser 310.

In an exemplary embodiment of the present disclosure, the optical instrument includes the condenser 310, the tube lens 320, and the dichroic mirror 330. The dichroic mirror 330 is configured to separate the first lens group 311 and the second lens group 312, as well as the third lens group 321 and the second lens group 312.

It should be noted that the dichroic mirror may be replaced with any other beam splitting optical element having a function of transmitting or reflecting a light beam based on a wavelength of the light beam.

According to the optical instrument in the embodiment of the present disclosure, the fluorescence excitation optical path and fluorescence collection optical path in the relevant optical microscope may be tightly combined.

In an exemplary embodiment of the present disclosure, the infinitely objective 370 may be a simplified infinite miniature objective. The meaning of "simplified" is that a quantity of lenses in the objective is small, a length of the objective is short, and a surface of the lenses is relatively flat. A length of the simplified infinite miniature objective provided by the embodiment of the present disclosure is 4.34 mm, and a physical aperture of an optical lens of the simplified infinite miniature objective is 3 mm.

It should be noted that the embodiment of the present disclosure only provides an example parameter and related structural description of the infinite objective 370, and is not a specific limitation on the infinite objective 370. Those skilled in the art may choose other types of objectives to replace the infinite objective 370 based on an actual situation.

A transmission distance of scattered fluorescence may be shortened by the simplified infinite miniature objective, so that a loss of scattered fluorescence within the simplified infinite miniature objective may be further reduced.

In an exemplary embodiment of the present disclosure, the collimating lens 340 is composed of a negative lens and a cemented doublet lens. However, the configuration of the collimating lenses is not unique. Any form of the collimating lens that may achieve a collimation function, meet a structural size requirement, and obtain a desired collimating beam may be used.

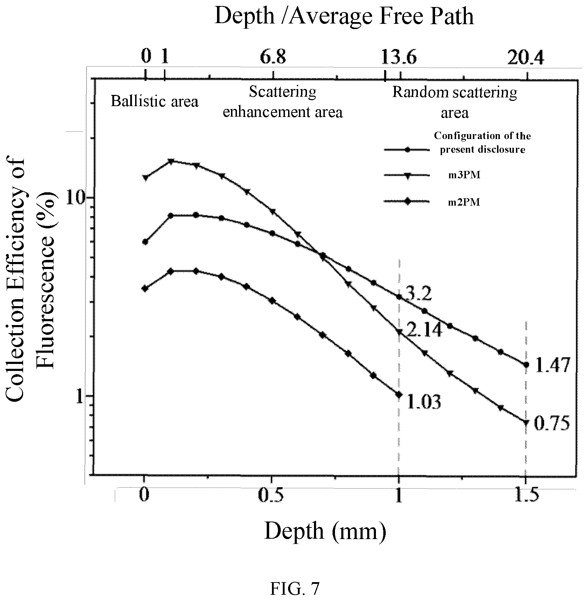

Experiments about a collection efficiency of scattering fluorescence were conducted based on the optical configurations shown in FIG. 1, FIG. 2, and FIG. 3. Specifically, a propagation trajectory of scattered fluorescence is simulated and traced using an optical design software Zemax. Therein, an ideal light-emitting point is implanted in a sample tissue for scattering test to simulate a fluorescence excitation point, and 1 million light rays are emitted by the ideal light-emitting point. A scattering property of the scattering sample tissue is configured. Specifically, a scattering length is configured to be 75 µm, and a scattering anisotropy factor is configured to be 0.92. Through Monte Carlo Path Tracing by the software, fluorescence collection efficiencies of the optical configurations shown in FIG. 1, FIG. 2, and FIG. 3 are obtained as shown in FIG. 7.

FIG. 7 is a line graph of fluorescence collection efficiencies of three optical instruments according to an exemplary embodiment of the present disclosure. Therein, m2PM is an abbreviation of the optical instrument provided by the embodiment shown in FIG. 1, and m3PM is an abbreviation of the optical instrument provided by the embodiment shown in FIG. 2. A maximum numerical aperture of m2PM is 0.5, and a working distance of m2PM is 1 mm. A maximum numerical aperture of m3PM is 0.9, and a working distance of m3PM is 1.75 mm. A maximum numerical aperture of the configuration shown in FIG. 3 of the present disclosure is 0.65, and a working distance thereof is 1.75mm. The optical instrument shown in FIG. 3 of the present disclosure, m2PM, and m3PM have a same size of a final fluorescence collection surface, which is 1.7 mm.

An average free path shown in FIG. 7 refers to an average length of a single scattering. As shown in FIG. 7, when a depth of a sample tissue is 1 mm, the fluorescence collection efficiency of the configuration of the present disclosure is 3.2%, the fluorescence collection efficiency of m3PM is 2.14%, and the fluorescence collection efficiency of m2PM is 1.03%. When the depth of the sample tissue is 1.5 mm, the fluorescence collection efficiency of the configuration of the present disclosure is 1.47%, and the fluorescence collection efficiency of m3PM is 0.75%. That is, after an inflection point of a scattering enhancement area, the fluorescence collection efficiency of the configuration of the present disclosure is consistently better than the fluorescence collection efficiencies of m2PM and m3PM.

Table 1 is a comparison result of fluorescence collection efficiency data for three optical instruments provided by an exemplary embodiment of the present disclosure. As shown in Table 1, a simulation result shows that, with a same numerical aperture (NA) of the objective being 0.65, the fluorescence collection efficiencies of the configuration of the present disclosure are 2.58 times and 3.59 times the fluorescence collection efficiencies of m3PM at depths of 1 mm and 1.5 mm, respectively. With a same NA of the objective being 0.5, the fluorescence collection efficiency of the configuration of the present disclosure is 2.18 times the fluorescence collection efficiency of m2PM at a depth of 1mm. "*" represents that a diaphragm is used to adjust the NA of the objective to a specified value.

**Table 1 Comparison of fluorescence collection efficiency data for three optical instruments**

| Optional Configuration | Fluorescence Collection Efficiency (%) | |
|---|---|---|
| | 1 mm Depth | 1.5 mm Depth |
| Configuration of the Present Application (NA0.65) | 3.20 | 1.47 |
| m3PM (NA0.65)* | 1.24 | 0.41 |
| m3PM (NA0.9) | 2.14 | 0.75 |
| Configuration of the Present Application (NA0.5)* | 2.25 | 1.03 |
| m2PM (NA0.5) | 1.03 | - |

Therefore, through simulation calculations, compared to configurations of m2PM and m3PM, the configuration of the optical instrument provided by the present disclosure has a significant advantage in enhancing the collection efficiency of scattering fluorescence.

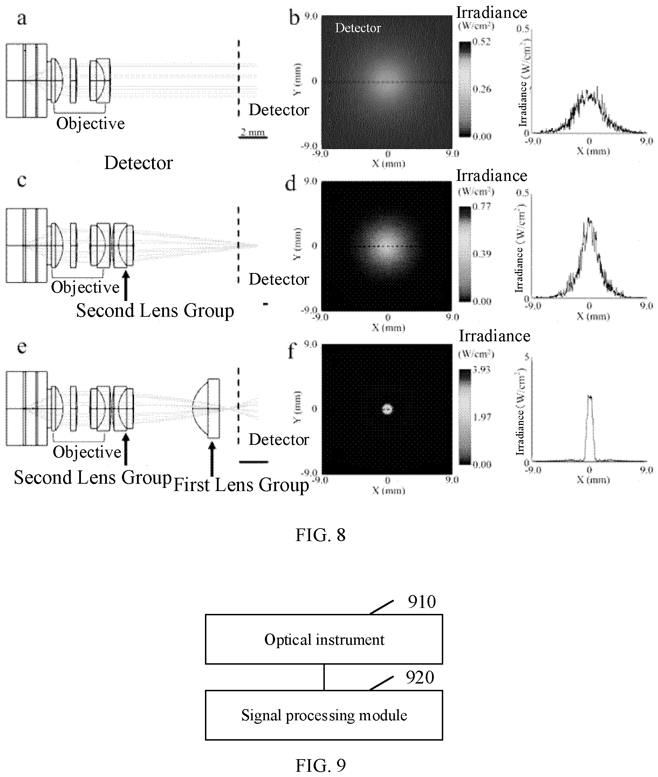

In order to explain the principle of the collection efficiency of scattered fluorescence of the optical instrument provided by the embodiment of the present disclosure, the present disclosure further simulates a propagation trajectory of the scattered fluorescence and provides FIG. 8. FIG. 8 is an analysis diagram of fluorescence propagation trajectories of a collection optical path of an optical instrument according to an exemplary embodiment of the present disclosure. As shown in FIG. 8, an optical instrument shown in a only includes an objective 370, an optical instrument shown in c includes the objective 370 and a second lens group 312, and an optical instrument shown in e includes the objective 370, the second lens group 312, and a first lens group 311. In addition, b represents a size and irradiance distribution of scattered fluorescence received on a detector under an action of the optical instrument shown in a, d represents a size and irradiance distribution of scattered fluorescence received on a detector under an action of the optical instrument shown in c, and f represents a size and irradiance distribution of scattered fluorescence received on a detector under an action of the optical instrument shown in e.

A specific experimental process is as follows. A point light source is implanted at a depth of 1 mm in a non-uniform scattered brain tissue, and a scattering property of the scattering sample tissue is configured. Specifically, a scattering length is 75 µm, and a scattering anisotropy factor is configured to be 0.92. A detector (a detector area is configured to be 18×18 mm²) is placed at a position of a fluorescence collection fiber bundle, so that the detector receives all scattered fluorescence.

The figures shown in a, c, and e only show propagation of light rays without considering brain tissue scattering, while the corresponding figures shown in b, d, and e show sizes and irradiance distribution of scattered fluorescence received by the detector with the brain tissue scattering considered. It can be seen that under the actions of the optical instruments shown in a, c, and e, full widths at half maxima of the scattered fluorescence sizes on the detectors shown in b, d, and e decrease from 5.2 mm to 3 mm, and finally to 1.1 mm. Therefore, a combination of the objective , the second lens group 312, and the first lens group 311 may improve a collection efficiency of scattered fluorescence entering the fluorescence collection fiber bundle.

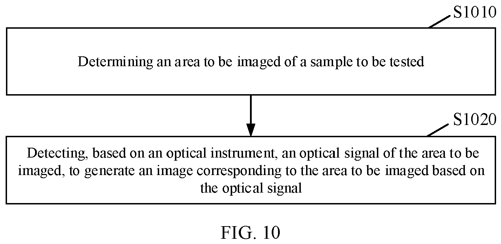

The optical instrument of the present disclosure has been described in detail with reference to FIGS. 1 to 8 mentioned above. Embodiments of an imaging system and an imaging method provided by the present disclosure will be described with reference to FIG. 9 and FIG.10 in the following. It should be understood that the description of the embodiments of the imaging system and the imaging method corresponds to the description of embodiments of the optical instrument. Therefore, parts that are not described in detail may refer to the previous method embodiments.

FIG. 9 is a schematic structural diagram of an imaging system according to an exemplary embodiment of the present disclosure. As shown in FIG. 9, the imaging system provided in the embodiment of the present disclosure includes:

an optical instrument 910, configured to collect an optical signal of a sample to be tested, where the optical instrument is the optical instrument described in any embodiment of the present disclosure; and

a signal processing module 920, configured to convert the optical signal collected by the optical instrument into an image.

FIG. 10 is a flowchart of an imaging method according to an exemplary embodiment of the present disclosure. As shown in FIG. 10, the imaging method includes the following steps.

Step S1010: determining an area to be imaged of a sample to be tested.

Step S1020: detecting, based on an optical instrument, an optical signal of the area to be imaged, to generate an image corresponding to the area to be imaged based on the optical signal. The optical instrument is an optical instrument described in any embodiment of the present disclosure.

Through the imaging method shown in FIG. 10, an image corresponding to the area to be imaged of a brain tissue sample may be further determined, and based on the image corresponding to the area to be imaged of the brain tissue sample, a brain function of the area to be imaged of the brain tissue sample may be studied.

The above describes the basic principle of the present disclosure in conjunction with specific embodiments. However, it should be pointed out that the advantages, benefits, effects, and the like mentioned in the present disclosure are only examples and not limitations, and cannot be considered as essential for each embodiment of the present disclosure. In addition, the specific details disclosed above are only to provide examples and facilitate understanding, and are not limited. The above details do not limit the necessity for the present disclosure to use the above specific details for implementation.

The block diagrams of the device, apparatus, equipment, and system involved in the present disclosure are only illustrative examples and are not intended to require or imply that the connections, arrangements, and configurations must be made in the manner shown in the block diagrams. As will be recognized by those skilled in the art, the device, apparatus, equipment, and system can be connected, arranged, and configured in any way. Words such as "including", "comprising", "having", and the like are open-ended terms referring to "including but not limited to" and can be used interchangeably. The terms "or" and "and" used here refer to the word "and/or" and can be used interchangeably, unless the context clearly indicates otherwise. The term "such as" used here refers to the phrase "such as but not limited to" and can be used interchangeably.

It should further be pointed out that in the device, equipment, and method of the present disclosure, each component or step can be decomposed and/or recombined. The decompositions and/or recombinations should be considered equivalent solutions to the present disclosure.

The description of the disclosed aspects are provided to enable any person skilled in the art to make or use the present disclosure. The various modifications to the aspects are very obvious to those skilled in the art, and the general principles defined here can be applied to other aspects without departing from the scope of the present disclosure. Therefore, the present disclosure is not intended to be limited to the aspects shown herein, but rather to the widest range consistent with the principles and novel features disclosed herein.

For the purpose of illustration and description, the description has been provided. Furthermore, this description is not intended to limit the embodiments of the present disclosure to the form disclosed herein. Although multiple exemplary aspects and embodiments have been discussed above, those skilled in the art will recognize certain variations, modifications, alterations, additions, and sub-combinations thereof.

## Claims

1. An optical instrument, applied to a miniature multi-photon microscope, wherein the optical instrument is configured to have a fluorescence excitation optical path and a fluorescence collection optical path, and the optical instrument comprises:
a condenser, wherein the condenser comprises a first lens group and a second lens group separately disposed, the first lens group is located in the fluorescence collection optical path, the second lens group is located in the fluorescence excitation optical path and the fluorescence collection optical path, and the second lens group is tightly arranged with an objective.

2. The optical instrument according to claim 1, further comprising a third lens group located in the fluorescence excitation optical path, wherein in the fluorescence excitation optical path, configurations of the third lens group and the second lens group are tube lenses.

3. The optical instrument according to claim 2, further comprising a beam splitting optical element located in the fluorescence excitation optical path and the fluorescence collection optical path, wherein the beam splitting optical element is configured to transmit or reflect a light beam based on a wavelength of the light beam.

4. The optical instrument according to claim 3, wherein the beam splitting optical element comprises a dichroic mirror.

5. The optical instrument according to claim 4, wherein the first lens group and the second lens group are separated by the dichroic mirror, and the second lens group and the third lens group are separated by the dichroic mirror.

6. The optical instrument according to claim 5, further comprising a femtosecond laser device located in the fluorescence excitation optical path, wherein the femtosecond laser device is configured to enable a sample to be tested loaded on the optical instrument to simultaneously absorb at least two photons.

7. The optical instrument according to any one of claims 2 to 6, further comprising a collimating lens, a galvanometer and a scanning lens located in the fluorescence excitation optical path, wherein the collimating lens is configured to collimate an initial laser beam and emit a collimated beam, the galvanometer is configured to reflect and scan the collimated beam, and the scanning lens is configured to focus the collimated beam reflected by the galvanometer on a focal plane of the scanning lens to obtain a focused beam, and emit the focused beam to the third lens group.

8. The optical instrument according to claim 7, wherein the collimating lens comprises a negative lens and a cemented doublet lens.

9. The optical instrument according to any one of claims 1 to 8, wherein the objective comprises an infinite objective, and the objective is located in the fluorescence excitation optical path and the fluorescence collection optical path.

10. The optical instrument according to claim 9, wherein a length of the infinite objective is not greater than 4.34 mm, and a physical aperture of an optical lens of the infinite objective is not greater than 3 mm.

11. The optical instrument according to claim 1, wherein in the fluorescence excitation optical path, a configuration of the second lens group is a tube lens.

12. The optical instrument according to claim 1, further comprising a fourth lens group, wherein in the fluorescence excitation optical path, configurations of the fourth lens group and the second lens group are tube lenses, and the fourth lens group and the second lens group are tightly arranged with each other.

13. The optical instrument according to any one of claims 1 to 12, wherein the second lens group is configured to converge a fluorescent beam emitted by the objective and emit a first convergent beam.

14. The optical instrument according to claim 13, wherein the first lens group is configured to emit a second convergent beam based on the first convergent beam, and a diameter of the second convergent beam is less than a diameter of the first convergent beam.

15. An optical imaging system, comprising:
the optical instrument according to any one of claims 1 to 14, configured to collect an optical signal of a sample to be tested; and
a signal processing module, configured to convert the optical signal collected by the optical instrument into an image.

16. An imaging method, comprising:
determining an area to be imaged of a sample to be tested; and
detecting, based on the optical instrument according to any one of claims 1 to 14, an optical signal of the area to be imaged, to generate an image corresponding to the area to be imaged based on the optical signal.
